# DEMANDE DE BREVET EUROPEEN

(11) **EP 0 869 271 A1**
(43) Date de publication de la demande: **07.10.1998**
(21) Numéro de dépôt: 98400774.0
(22) Date de dépôt: 02.04.1998
(51) Int. Cl.: F02K 1/76

(54) **Dispositif de fermeture et de verrouillage des obturateurs d'un inverseur de poussée**

(30) Priorité: 03.04.1997 FR 9704049
(71) Demandeur: Hispano-Suiza Aerostructures, 75015 Paris (FR)
(72) Inventeur: Baudu, Pierre André Marcel, 76600 - Le Havre (FR); Gonidec, Patrick, 76290 - Montivilliers (FR); Rouyer, Pascal Gérard, 76430 - Saint Aubin Routot (FR); Vauchel, Guy Bernard, 76610 - Le Havre (FR)

(57) **Abrégé**

L'invention propose un dispositif (30) de fermeture et de verrouillage des obturateurs (12) d'un inverseur de poussée (1) pour aéronef.

Un tel dispositif (30) est remarquable en ce que le pêne (22) du verrou (21) est motorisé afin d'achever la fermeture de l'obturateur (12) avec l'énergie fournie par le moteur (38) et soulager ainsi le vérin (15) actionnant ledit obturateur (12).

Un tel dispositif est aussi remarquable en ce qu'il comporte une butée (31) en opposition avec le pêne (22) du verrou (21), ladite butée (31) coopérant avec une contre-butée (34) afin d'immobiliser l'obturateur (12) en position fermée et réduire ainsi les vibrations et battements dont ledit obturateur (12) est le siège.

## Description

L'invention se rapporte aux inverseurs de poussée pour aéronefs, et plus particulièrement à un dispositif pour achever la fermeture et verrouiller en position fermée les obturateurs desdits inverseurs.

Les inverseurs de poussée pour aéronef sont des structures minces et sensiblement annulaires entourant le turbomoteur et centrées sur l'axe géométrique dudit turbomoteur. Un inverseur de poussée comporte notamment une structure fixe entourant le turbomoteur, ladite structure fixe étant traversée par une pluralité d'ouvertures radiales obturées par des obturateurs mobiles. Lorsque les obturateurs sont fermés, la fonction de l'inverseur de poussée est de canaliser vers l'arrière le flux de gaz de propulsion généré par le turbomoteur. Lorsque les obturateurs sont ouverts, les gaz de propulsion passent par les ouvertures radiales et sont déviés vers l'avant, ce qui produit l'inversion de poussée.

Chaque obturateur est habituellement refermé par au moins un vérin qui doit être logé dans l'épaisseur de la structure de l'inverseur, une extrémité du vérin étant rattachée à la structure fixe, alors que son autre extrémité est rattachée à l'obturateur. L'obturateur est maintenu en position fermée par au moins un verrou qui est habituellement solidaire de la structure fixe. Ce verrou comporte un pêne mobile qui retient l'obturateur par l'intermédiaire d'une interface de verrouillage, cette interface de verrouillage étant elle-même solidaire de l'obturateur. On notera que le verrou peut aussi être solidaire de l'obturateur et que l'interface de verrouillage est alors solidaire de la structure fixe. L'interface de verrouillage comporte habituellement un galet pivotant monté à l'extrémité d'un tirant, le pêne du verrou agissant sur le galet pour retenir l'obturateur en position fermée. Lorsque l'obturateur se referme et arrive au voisinage de sa position fermée, le vérin doit exercer un effort supplémentaire de traction important pour :
- amener l'obturateur sur des paliers assurant un positionnement précis dudit obturateur au voisinage de la position fermée,
- mettre en compression les joints d'étanchéité qui sont généralement en élastomère, ces joints étant disposés entre le pourtour de l'obturateur et la structure fixe,
- déclencher le verrou de l'obturateur qui est habituellement du type passif, c'est à dire que le pêne du verrou est amené mécaniquement en position fermée par le mouvement même de l'interface de verrouillage de l'obturateur qui appuie sur le pêne du verrou et l'amène à sa position fermée, ledit pêne se verrouillant alors automatiquement en position fermée par un mécanisme à came et ressort,
- " surescamoter" l'obturateur, c'est à dire dépasser légèrement la position fermée de l'obturateur afin de permettre le verrouillage automatique du pêne, le "surescamotage" entraînant temporairement une compression supplémentaire des joints d'étanchéité entre l'obturateur et la structure fixe. Cet effort supplémentaire exige un renforcement du vérin, de la structure fixe et de l'obturateur, ce qui en augmente la mase et le coût.

Cet effort supplémentaire doit être exercé dans des conditions très défavorables dans le cas des inverseurs de poussée du type dit "à portes pivotantes" bien connus. On sait que dans de tels inverseurs, chaque ouverture radiale est obturée par un obturateur appelé dans ce cas "porte", cet obturateur étant monté pivotant dans la structure fixe, le pivotement s'effectuant habituellement dans un plan comprenant l'axe géométrique de l'inverseur. En effet dans ce cas, lorsque l'obturateur arrive au voisinage de la position fermée, l'axe géométrique du vérin se rapproche de l'axe géométrique de pivotement de l'obturateur, de sorte que le vérin doit exercer un effort supplémentaire très important pour ne produire sur l'obturateur qu'un couple de pivotement réduit.

Cet effort supplémentaire doit encore être augmenté dans le cas des inverseurs dont les obturateurs pivotants sont dits "auto-ouvrant". On sait en effet que dans de tels inverseurs de poussée, les obturateurs tendant à s'ouvrir naturellement sous l'effet de la pression des gaz de propulsion générés par le turbomoteur, ceci provenant de la position déportée des pivots, le vérin devant fournir un effort supplémentaire pour vaincre cette tendance.

Un premier problème à résoudre est de réduire l'effort demandé au vérin dans le voisinage de la position fermée de l'obturateur.

Dès que l'obturateur est refermé et verrouillé, le vérin est désactivé. L'obturateur est en conséquence relâché et peut se mettre à vibrer ou à battre sous l'effet combiné:
- des vibrations transmises par le turbomoteur à l'inverseur,
- de l'écoulement turbulent de l'air ambiant et des gaz de propulsion aux extrémités de l'obturateur, ces vibrations ou battements provoquant un matage et une usure accélérée des organes de verrouillage, notamment du pêne du verrou et de l'interface de verrouillage.

Les inverseurs de poussée à obturateurs pivotants sont plus exposés à ce phénomène du fait que les extrémités avant desdits obturateurs constituent des bords d'attaque exposés à l'écoulement de l'air ambiant ou des gaz de propulsion. Les battements appelés dans ce cas "flapping" apparaissent principalement aux bas régimes du turbomoteur, la pression des gaz de propulsion étant alors insuffisante pour plaquer l'obturateur contre le pêne du verrou par l'intermédiaire de l'interface de verrouillage.

Un second problème à résoudre est de réduire voire supprimer les vibrations et battements des obturateurs en position verrouillée.

L'invention propose un dispositif de fermeture et de verrouillage des obturateurs d'un inverseur de poussée, ledit inverseur de poussée comportant une structure fixe appelée aussi première partie, ledit inverseur de poussée comportant au moins un obturateur appelé aussi seconde partie, ledit dispositif de fermeture et de verrouillage comportant un verrou solidaire d'une partie et une interface de verrouillage solidaire de l'autre partie, ledit verrou comportant un pêne coopérant avec l'interface de verrouillage pour maintenir l'obturateur fermé. Un tel dispositif est remarquable en ce qu'il comporte un moteur relié au pêne, afin de mouvementer le pêne au moins à la fermeture, et en ce que pendant son mouvement de fermeture, le pêne est susceptible de repousser l'interface de verrouillage vers la position fermée, afin d'achever la fermeture de l'obturateur avec l'énergie fournie par le moteur.

On comprend que le dispositif permet de relayer le vérin de porte au voisinage de la position fermée de l'obturateur, c'est à dire au moment où ce vérin doit fournir l'effort de traction le plus important, ce qui résout le premier problème.

L'invention présente l'avantage de supprimer le "surescamotage" de l'obturateur, ce qui simplifie la géométrie de l'obturateur et de la structure fixe, et permet de réduire encore les efforts exercés à la fermeture sur l'obturateur et la structure fixe.

Un autre avantage de l'invention est de permettre l'augmentation des tolérances de fabrication de l'inverseur, pour la chaîne de fabrication de l'inverseur, pour la chaîne de côtes de l'ensemble verrou - structure fixe - obturateur - interface de verrouillage, puisque ladite interface de verrouillage n'a plus à actionner le pêne du verrou vers la position fermée, ce qui exigeait auparavant un positionnement précis dans l'espace du pêne et de l'interface de verrouillage.

Avantageusement, le moteur est rotatif et est relié au pêne par une transmission démultipliée, c'est à dire réduisant la vitesse, afin de générer sur le pêne une force importante à partir d'un petit moteur. L'ensemble est de taille réduite, et le moteur peut ainsi être logé directement dans le boîtier du verrou.

Avantageusement encore, la transmission est irréversible, c'est à dire qu'elle transmet le mouvement du moteur vers le pêne, mais pas du pêne vers le moteur, afin de s'opposer au déplacement du pêne dans le sens de l'ouverture sous l'effet de la réaction exercée par l'interface de verrouillage sur le pêne. Une telle transmission peut être constituée d'une vis sans fin s'engrenant avec une roue dentée, la vis sans fin étant accouplée au moteur et la roue dentée au pêne. Une telle transmission peut être aussi constituée par une vis entraînant un écrou, la vis étant accouplée au moteur et l'écrou au pêne.

Avantageusement aussi, le dispositif comportera un détecteur de présence de l'interface de verrouillage face au verrou, le moteur étant commandé à la fermeture par le détecteur de présence. Ceci a pour effet d'asservir la fermeture du pêne à la présence de l'interface de verrouillage et pour résultat d'empêcher la fermeture du verrou en cas d'anomalie ayant empêché l'obturateur d'arriver à proximité de sa position fermée.

Cette disposition évite de devoir synchroniser le déplacement de l'obturateur et la fermeture du verrou et permet en conséquence d'élargir encore plus les tolérances de fabrication.

Avantageusement encore, le dispositif comportera un détecteur de position fermée du pêne, ledit détecteur commandant l'arrêt du moteur lorsque le pêne arrive en position fermée. Ceci a pour effet d'arrêter, par arrêt du moteur, l'entraînement du pêne vers la position fermée, et pour résultat d'éviter l'échauffement du moteur ainsi que toute consommation inutile d'énergie.

Avantageusement encore, le détecteur de position fermée commande le moteur à la fermeture de façon réversible, afin de remettre le moteur en fonctionnement dans le sens de la fermeture lorsque le pêne s'écarte de la position fermée. Ceci permet de refermer le pêne lorsqu'il tend à s'ouvrir de façon accidentelle, par exemple suite à un glissement de la transmission entre le moteur et le pêne. La sécurité du verrouillage est en conséquence améliorée.

Avantageusement encore, un dispositif de signalisation tel un voyant sur le tableau de bord de l'avion sera connecté au détecteur de position fermée du pêne, afin de signaler la bonne fermeture du verrou. Une telle signalisation présente l'avantage d'être très fiable, puisqu'elle est commandée par la fermeture effective du verrou, et non par la commande de ladite fermeture.

Avantageusement aussi, le moteur étant commandé à la fermeture par un détecteur de présence de l'interface de verrouillage précédemment décrit, un dispositif de signalisation tel un voyant sur le tableau de bord de l'avion sera connecté au détecteur de position fermée du pêne, afin de signaler la fermeture du verrou sur l'interface de verrouillage. On comprend que la combinaison du détecteur de présence de l'interface de verrouillage avec le détecteur de position fermée du pêne et le dispositif de signalisation permet de vérifier sans erreur possible le verrouillage effectif de la porte sur la structure fixe.

Dans un mode particulier de réalisation de l'invention, le dispositif comporte aussi une butée solidaire de l'ensemble constitué par la partie de l'inverseur supportant le verrou et le verrou lui-même, cette butée étant en opposition avec le pêne lorsqu'il se referme, alors que l'ensemble constitué par la partie de l'inverseur supportant l'interface de verrouillage et l'interface de verrouillage elle même comporte une contre-butée qui arrive, en position fermée de l'obturateur, contre ladite butée. Cette combinaison a pour effet d'immobiliser l'obturateur en position fermée par l'action combinée du pêne et de la butée en opposition, et pour résultat de réduire les vibrations et les battements de l'obturateur
On comprend que l'obturateur est retenu par l'action combinée de deux organes solides qui sont le pêne et la butée en opposition avec le pêne, ce qui permet l'immobilisation de l'obturateur et réduit les vibrations et les battements. Dans l'art antérieur au contraire, l'immobilisation est imparfaite car elle se fait par l'action combinée du pêne et des joints d'étanchéité entre l'obturateur et la structure fixe, ces joints étant élastiques.

On comprend aussi que l'immobilisation de l'obturateur peut se faire avec un jeu très faible voire nul, car c'est le pêne lui-même qui achève le mouvement de fermeture de la porte, en agissant sur l'interface de verrouillage, avec l'énergie fournie par le moteur. Avantageusement, la transmission entre le moteur et le pêne comporte un élément élastique, mais de raideur suffisante, afin d'exercer sur le pêne en position fermée une poussée permanente dans le sens de la fermeture. On comprend que cette poussée permanente se répercute sur l'interface de verrouillage et sur la contre-butée, la poussée étant ensuite reprise par la butée, ce qui maintient sans jeu la porte fermée et supprime complètement les vibrations et battements. L'homme du métier ajustera la raideur de l'élément élastique en fonction du niveau des forces générées entre l'interface de verrouillage et le pêne par les vibrations et battements de l'obturateur. L'homme du métier ajustera la raideur de l'élément élastique en fonction du niveau des forces générées entre l'interface de verrouillage et le pêne par les vibrations et battements de l'obturateur.

Cet élément élastique a aussi pour avantage de réduire les contraintes imposées à la transmission et au moteur lorsque la porte est immobilisée en position fermée, mais avant que le détecteur de position fermée n'ai coupé le moteur.

Dans un premier mode de réalisation de l'invention, la butée est solidaire de la partie de l'inverseur supportant le verrou, par exemple la structure fixe, alors que la contre-butée est solidaire de l'autre partie, c'est à dire de l'obturateur dans cet exemple. Avantageusement, la butée sera au voisinage du verrou et la contre-butée au voisinage de l'interface de verrouillage, afin de réduire les contraintes de torsion imposées à la structure fixe et à l'obturateur.

Toutefois, dans un mode préféré de réalisation de l'invention, la butée est solidaire du verrou, et plus précisément de son boîtier, afin de reprendre directement par le boîtier du verrou l'effort exercé par le pêne et repris par la butée, ce qui soulage de cet effort la partie de l'inverseur supportant le verrou, par exemple la structure fixe. Cette disposition présente aussi l'avantage de ne pas nécessiter de modification de la partie de l'inverseur supportant le verrou.

Avantageusement enfin, le contre-butée est constituée par l'interface de verrouillage elle-même alors que le pêne et la butée forment une pince, ce qui a pour effet de "pincer" ladite interface de verrouillage entre le pêne et la butée, et pour résultat de ne pas imposer à la partie de l'inverseur supportant l'interface de verrouillage l'effort exercé par le pêne sur ladite interface de verrouillage et repris par la butée. Cette disposition "à pince" présente aussi l'avantage de ne pas nécessiter de modification de la partie de l'inverseur supportant l'interface de verrouillage, par exemple l'obturateur.

Dans un autre mode particulier de réalisation de l'invention, le pêne a la forme d'un barillet monté pivotant à l'intérieur d'un crochet solidaire du boîtier du verrou, ledit pêne comportant un évidement central prolongé par une ouverture radiale, l'interface de verrouillage pénétrant dans l'ouverture radiale lorsque l'obturateur arrive en position fermée et étant ensuite emprisonné dans l'évidement central par la rotation du barillet. Une telle disposition présente l'avantage d'emprisonner l'interface de verrouillage contre le verrou et d'interdire tout risque de dégagement de l'interface de verrouillage d'ouverture accidentelle de la porte suite à une déformation de la structure fixe de l'inverseur résultant par exemple de l'éclatement d'un disque du turbomoteur.

Avantageusement, un poussoir élastique repousse l'interface de verrouillage dans le sens de l'ouverture, afin de plaquer ladite interface de verrouillage contre la paroi de l'évidement central. Une telle disposition permet de maintenir la porte sans jeu et par répercussion de supprimer les battements de la porte.

L'invention sera mieux comprise et les avantages qu'elle procure apparaîtront plus clairement au vu d'une brève description de l'état de la technique, de la description détaillée de quelques exemples de réalisation donnés à titre indicatif et non limitatif, ainsi que des figures annexées.

La figure 1 rappelle la conception générale d'un inverseur de poussée dont les obturateurs sont montés pivotants sur la structure fixe.

La figure 2 rappelle l'emploi d'un verrou classique dit "passif" sur ce type d'inverseur.

La figure 3 illustre un dispositif de fermeture et de verrouillage du type "à pince".

La figure 4 illustre une transmission par roue et vis sans fin appliquée à un dispositif de fermeture et de verrouillage du type "à pince".

la figure 5 illustre une transmission par roue et vis sans fin avec moyeu élastique à ressorts hélicoïdaux, ladite transmission étant appliquée à un dispositif de fermeture et de verrouillage du type "à pince".

La figure 6 illustre une transmission par roue et vis sans fin avec accouplement élastique, ladite transmission étant appliquée à un dispositif de fermeture et de verrouillage du type "à pince".

la figure 7 illustre une transmission par vis et écrou appliquée à un dispositif de fermeture et de verrouillage du type "à pince".

La figure 8 illustre une transmission par vis et écrou avec moyens élastiques, ladite transmission étant appliquée à un dispositif de fermeture et de verrouillage du type "à pince".

La figure 9 illustre un dispositif de fermeture et de verrouillage avec butée et contre-butée distincte de l'interface de verrouillage.

la figure 10 illustre par une coupe selon BB un dispositif de fermeture et de verrouillage dont l'interface de verrouillage est une came et dont la trajectoire du pêne est sensiblement orthogonale à la trajectoire de l'interface de verrouillage.

La figure 11 illustre par une coupe selon AA la coopération du pêne avec l'interface de verrouillage dans un tel dispositif de fermeture et de verrouillage.

la figure 12 illustre un dispositif de fermeture et de verrouillage du type "à barillet".

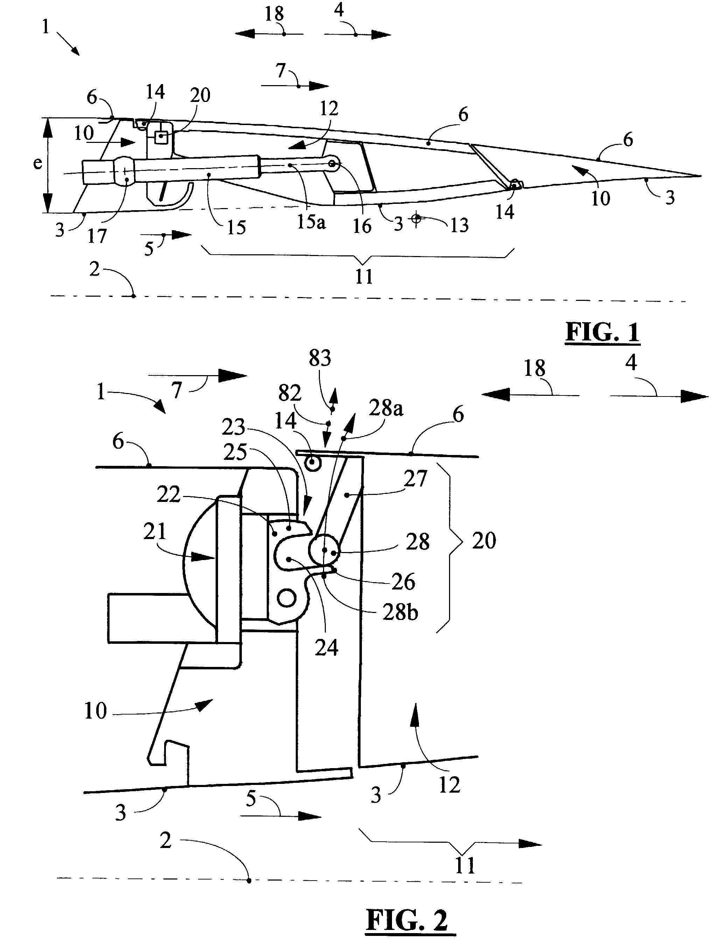

On se reportera en premier lieu à la figure 1. Un inverseur de poussée 1 est une structure sensiblement annulaire d'axe géométrique 2 entourant le turbomoteur non représenté. L'inverseur de poussée 1 comporte une paroi intérieure 3 qui canalise vers l'arrière 4 les gaz de propulsion 5 générés par le turbomoteur. L'inverseur de poussée 1 comporte aussi une paroi extérieure 6 le long de laquelle s'écoule l'air ambiant 7. L'inverseur de poussée 1 comporte aussi une structure fixe ou première partie 10 traversée par une pluralité d'ouvertures sensiblement radiales 11, lesdites ouvertures 11 étant fermées par des obturateurs ou seconde partie 12 montées avec des pivots 13 sur la structure fixe 10. Dans ce type d'inverseur, les obturateurs 12 sont également appelés "portes". Des joints d'étanchéité élastique 14 sont comprimés entre la périphérie de l'obturateur 12 et la structure fixe 10.

L'obturateur est habituellement actionné à l'ouverture et à la fermeture par un vérin 15 dont une extrémité est reliée à l'obturateur 12 par une articulation 16 et dont l'autre extrémité est reliée à la structure fixe 10 par une rotule 17. Lorsque l'obturateur 12 est ouvert, le flux de gaz de propulsion 5 passe par les ouvertures radiales 11 et est dévié vers l'avant 18 par les obturateurs 12 faisant office de déflecteur, ce qui procure l'effet d'inversion de poussée.

Lorsque le vérin 15 achève la fermeture de l'obturateur 12, il doit fournir un effort de traction très important pour les causes suivantes dont les effets se cumulent :
- Du fait de la faible épaisseur e de l'inverseur 1 entre sa paroi intérieure 3 et sa paroi extérieure 6, l'axe géométrique 15a du vérin 15 se rapproche de l'axe géométrique des pivots 13, ce qui, pour une force de traction constante, réduit le couple de fermeture transmis par le vérin 15 à la porte 12.
- La mise en compression des joints d'étanchéité 14 imposent au vérin 15 un effort de traction supplémentaire alors qu'il est dans sa position la plus défavorable.

Lorsque la porte 12 est complètement fermée, elle est maintenu dans cette position par un système de verrouillage 20 reliant l'obturateur 12 à la structure 10. Le système de verrouillage 20 est habituellement mais par nécessairement disposé à l'avant de l'obturateur 12.

On se reportera maintenant à la figure 2. Le système de verrouillage 20 comporte habituellement un verrou 21 solidaire de la structure fixe 10, ledit verrou 21 comportant un pêne pivotant 22 terminé par une fourche 23 formant une échancrure 24 entre la branche supérieure 25 et la branche inférieure 26 de ladite fourche 23. Le système de verrouillage 20 comporte aussi un tirant 27 solidaire par une extrémité à la porte 12 et portant à son autre extrémité une interface de verrouillage 28 qui est par exemple un galet monté pivotant. On référencera 28a la trajectoire de l'interface de verrouillage 28 à l'approche de la position fermée. On référencera aussi 28b l'extrémité de la trajectoire correspondant à la position fermée de la porte.

On se reportera maintenant simultanément aux figures 1 et 2. Lorsque la porte 12 se referme sous l'effet de la traction du vérin 15, le pêne 22 ayant son échancrure 24 tournée vers l'interface de verrouillage 28, cette interface de verrouillage 28 pénètre dans l'échancrure 24 et appuie sur la branche inférieure 26, ce qui a pour effet de faire pivoter le pêne 22 vers sa position fermée et d'amener la branche supérieure 25 au dessus de l'interface de verrouillage 28. Un mécanisme de verrouillage interne au verrou 21 maintient le pêne 22 dans cette position fermée. L'effort de traction du vérin 15 est relâché, et l'obturateur 12 tend à s'ouvrir sous l'effet de la pression exercée par les gaz de propulsion 5, mais il est retenu par l'interface de verrouillage 28 qui arrive alors en appui contre la branche supérieure 25 de la fourche 23 du pêne 22.
Cette disposition présente cependant deux inconvénients :
- en premier lieu, elle exige une grande précision dans la fabrication de l'inverseur, afin que l'interface de verrouillage 28 puisse arriver très exactement dans l'échancrure 24 et puisse appuyer sur la branche inférieure 26 afin d'amener le pêne 22 en position fermée.
- en second lieu, lorsque le turbomoteur fonctionne à un régime réduit, la pression des gaz de propulsion 5 est basse et ne permet plus de repousser suffisamment l'obturateur et de maintenir l'interface de verrouillage 28 en appui contre la branche supérieure 25 du pêne 22. Du fait du jeu qui existe notamment entre l'interface de verrouillage 28 et les branches 25 et 26 du pêne 22, l'obturateur 12 se met à battre, ce qui a pour effet notamment de provoquer le matage et l'usure du pêne 22 et de l'interface de verrouillage 28, ainsi qu'une fatigue accélérée de la structure fixe 10 et des portes 12.

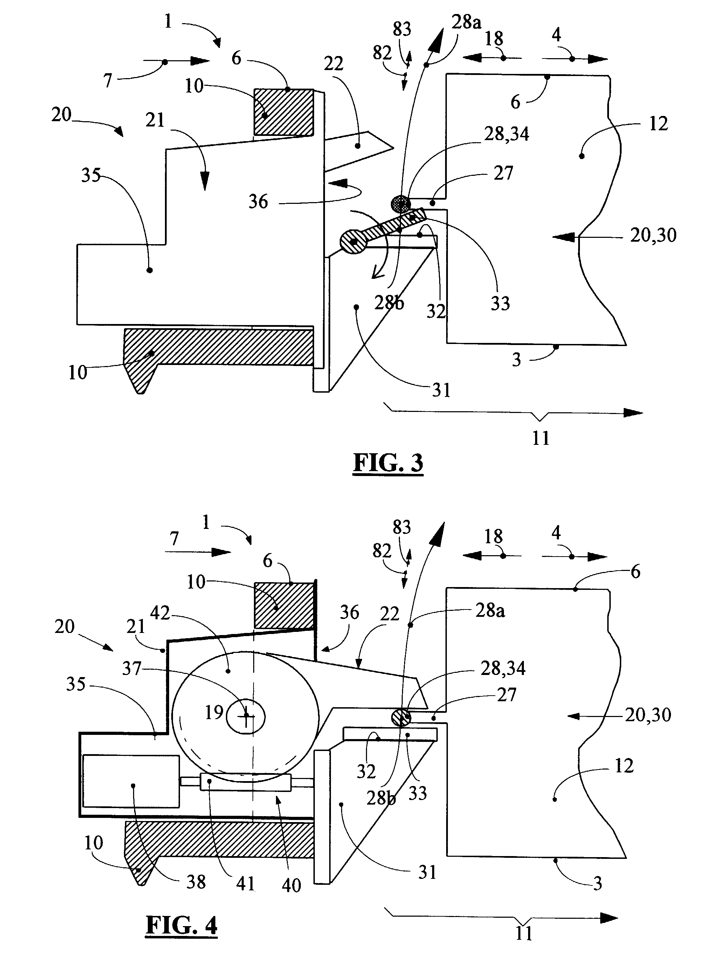

On se reportera maintenant à la figure 3. Le dispositif de fermeture et de verrouillage 30 comporte un verrou 21 solidaire de la structure fixe 10 et muni d'un pêne 22 coopérant avec une interface de verrouillage 28 solidaire de l'obturateur 12 par l'intermédiaire d'un tirant 27.

Selon l'invention, une butée 31 solidaire du verrou 21 offre une face d'appui 32 contre laquelle arrive l'interface de verrouillage 28 en position fermée de l'obturateur 12. La face d'appui 32 est sensiblement orthogonale à l'extrémité de la trajectoire 28a de l'interface de verrouillage 28, est située en regard du pêne 22 et en opposition avec ledit pêne 22. Lorsque l'obturateur 12 arrive vers la position fermée, l'interface de verrouillage 28 approche de la face d'appui 32 de la butée 31 et repousse un levier articulé 33 associé à un micro-contact électrique non représenté, ce qui met en route un moteur électrique dans le sens de la fermeture, ledit moteur provoquant le déplacement du pêne motorisé 22 vers la face d'appui 32. Le levier articulé 33 associé au micro-contact fait office de détecteur de présence. Du fait de son déplacement, le pêne motorisé 22 repousse l'interface de verrouillage 28 contre la face d'appui 32 de la butée 31, ce qui permet d'achever la fermeture de la porte 12 avec l'énergie fournie par le moteur non représenté et de décharger le vérin référence 15 sur la figure 1. De plus, l'interface de verrouillage 28 est pincée entre la face d'appui 32 de la butée 31 et le pêne motorisé 22, ce qui permet de maintenir avec un jeu minimum ladite interface de verrouillage 28 et de ramener à un minimum les battements de l'obturateur 12. L'invention présente aussi l'avantage de permettre un positionnement précis de l'obturateur 12 en position fermée, du fait que l'interface de verrouillage 28 est plaquée contre la butée 31 qui est fixe.

La butée 31 peut être remplacée par un crochet mobile ayant la même action que ladite butée 31 sur l'interface de verrouillage 28. Le sens de manoeuvre de ce crochet peut être opposé à celui du pêne 22.

Le verrou 21 peut comporter aussi un système de mesure non représenté des efforts transmis par le moteur 38 vers l'interface de verrouillage 28, afin de mesurer l'effort appliqué par le pêne 22 sur l'interface de verrouillage 28. Un tel système de mesure peut être purement électrique, par exemple en mesurant l'intensité du courant électrique consommé par le moteur 38, ou mécanique. Ce système présente deux avantages :
a) Il peut être utilisé pour arrêter le moteur 38 lorsque l'interface de verrouillage 28 est effectivement pincée entre le pêne 22 et la butée 31,
b) associé à un dispositif de signalisation à l'usage du pilote de l'aéronef, il permet de détecter les cas de rupture du mécanisme du verrou 21, essentiellement du pêne 22 et de la transmission 40, cette rupture passant habituellement inapperçue lorsque l'aéronef est au sol.

On notera que la contre-butée référencée 34 dans les exemples suivants est, dans cet exemple, constituée directement par l'interface de verrouillage 28 qui arrive en appui contre la face d'appui 32 de la butée 31.

On se reportera maintenant simultanément aux figures 3 et 4. Le verrou 21 précédemment décrit de l'extérieur comporte un boîtier 35 solidaire de la structure fixe 10, le boîtier 35 comportant lui-même une ouverture 36 par laquelle passe le pêne 22, ce pêne 22 pivotant à l'intérieur du boîtier 35 selon un axe géométrique de pivotement 37. Le verrou 21 comporte aussi un moteur électrique rotatif 38 solidaire du boîtier 35, ledit moteur électrique 38 étant connecté au détecteur de présence 33 de l'interface de verrouillage 28, ledit moteur électrique 38 étant accouplé au pêne 22 par une transmission 40 afin de mouvementer le pêne 22. La transmission 40 comporte notamment dans cet exemple une vis sans fin 41 accouplée au moteur 38 et une roue dentée 42 s'engrenant sur la vis sans fin 41, ladite roue dentée 42 étant concentrique à l'axe géométrique 37 du pêne 22 et accouplée audit pêne 22.

On se reportera maintenant aux figures 3, 4 et 5. L'accouplement flexible 45 reliant la roue à secteur denté 42 au pêne 22 est constitué comme suit : Le pêne 22 comporte un flasque 46 qui lui est solidaire et qui pivote également selon l'axe géométrique de pivotement 37 du pêne 22. Le flasque 46 est contre la roue dentée 42, concentrique à ladite roue dentée 42 selon l'axe géométrique 37 et libre en rotation par rapport à ladite roue dentée 42. Le flasque 46 comporte une pluralité de lumières 47 en forme d'arcs de cercle centrés sur l'axe géométrique 37. On référencera 47a et 47b les extrémités de chaque lumière 47 respectivement dans le sens de la fermeture et dans le sens de l'ouverture du pêne 22. La roue dentée 42 comporte une pluralité de tétons 48 pénétrant chacun dans une lumière 47, et un ressort hélicoïdal 49 précomprimé est disposé dans chacune des lumières 47 entre son extrémité du côté de la fermeture 47a et le téton 48.

La roue avec un secteur denté 42 comporte aussi à sa périphérie un téton radial 51 disposé face à un microcontact 52 solidaire du boîtier 35 et faisant office de détecteur de position fermée 50 du pêne 22.

Le fonctionnement en fermeture de l'ensemble est le suivant : Le moteur 38 en rotation entraîne les tétons 48 par l'intermédiaire de la vis sans fin 41 et de la roue à secteur denté 42. Les tétons 48 font tourner le pêne 22 vers la position fermée par l'intermédiaire des ressorts précontraints 49, et le pêne 22 repousse l'interface de verrouillage 28 contre la face d'appui 32 de la butée 31. Lorsque l'interface de verrouillage 28 est arrivé au contact de la butée 31, les ressorts précontraints 49 se compriment, ce qui permet au moteur 38 de poursuivre l'entraînement en rotation de la roue à secteur denté 42 par l'intermédiaire de la vis sans fin 41. Le téton 51 arrive alors contre le microcontact 52 qui coupe l'alimentation du moteur 38. La transmission 40 n'étant pas réversible, la roue à secteur denté 42 est immobilisée dans sa position courante, et l'interface de verrouillage 28 est maintenu en appui contre la butée 31 par l'intermédiaire du pêne 22 sous l'effet de la poussée exercée par les ressorts 49 sur le flasque 46 solidaire du pêne 22. Ceci permet de mettre l'interface de verrouillage 28 en précontrainte. Avantageusement, la vis sans fin 41 peut être immobilisée en rotation par tout moyen connu de l'homme du métier lorsque le pêne 22 est en position fermée. La roue à secteur denté 42 peut également être immobilisée en rotation en position fermée.

Cependant, si aucun verrouillage de la vis 41 ou du flasque 42 ne sont envisagés, dans le cas où un glissement vers l'ouverture se produirait entre la roue avec secteur denté 42 et la vis sans fin 41, la roue avec secteur denté 42 repart en arrière, ce qui éloigne le téton radial 51 du microcontact 52 et redéclenche le moteur 38 vers la fermeture. On remarquera que pendant ce temps, l'interface de verrouillage 28 à été maintenu appuyé contre la butée 31 par le pêne 22 sous l'effet de la pression des ressorts 49.

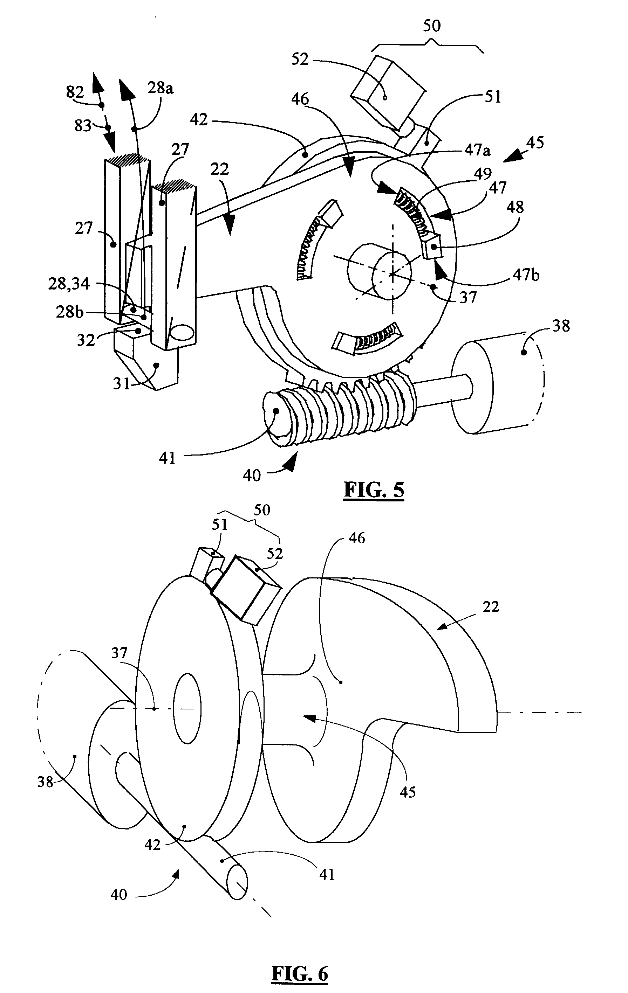

On se reportera maintenant à la figure 6. L'accouplement flexible 45 peut être aussi constitué par un bloc élastique, par exemple en élastomère, solidaire d'un côté à la roue à secteur denté 42 et de l'autre côté au flasque 46 du pêne 22.

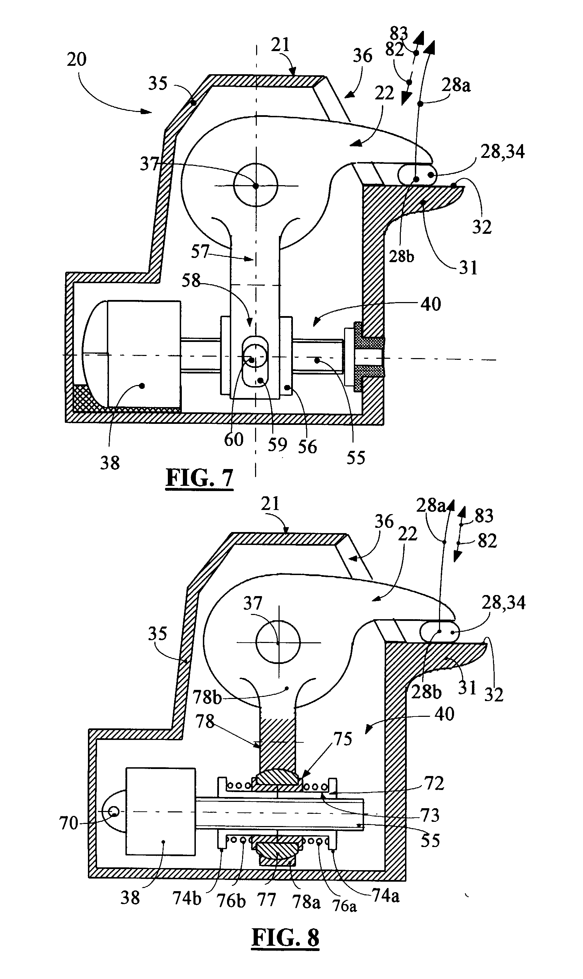

On se reportera maintenant simultanément aux figures 3 et 7. Dans cet exemple de réalisation, la transmission 40 comprend une vis 55 accouplée au moteur 38 et entraînée par lui, un écrou 56 se vissant sur la vis 55 et un bras 57 dont une extrémité est solidaire du pêne 22 alors que son autre extrémité est une fourche 58. La fourche 58 entoure l'écrou 56 et comporte dans chaque branche un trou oblong 59 dans chacun desquels passe un téton 60 solidaire de l'écrou 56.

On se reportera maintenant simultanément aux figures 3 et 8. Dans cet exemple de réalisation, le moteur 38 est monté basculant avec un pivot 70 sur le boîtier 35 et est accouplé à une vis 55 sur laquelle est disposé un écrou 72. L'écrou 72 comporte une portée extérieure cylindrique 73 bordée à chaque extrémité par un épaulement 74a et 74b; Un coulisseau 75 coulisse sur la portée cylindrique 73 et appuie sur chacun des épaulements 74a et 74b par des ressorts hélicoïdaux en compression respectivement 76a et 76b; Le coulisseau 75 supporte une rotule 77 qui pivote à l'extrémité libre 78a d'un bras 78 dont l'autre extrémité 78b est solidaire du pêne 22.

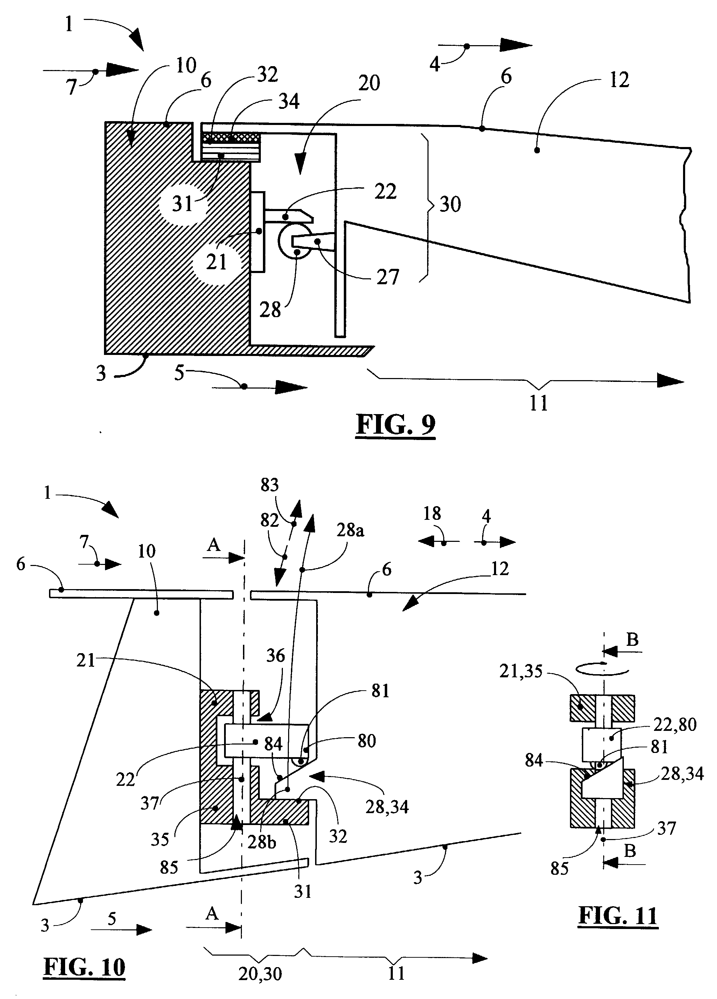

On se reportera maintenant à la figure 9. Dans cet exemple, le verrou motorisé 21 actionne le pêne 22 qui entraîne vers la position fermée l'interface de verrouillage 28 à l'extrémité du tirant 27. Le verrou 21 étant dans cet exemple monté sur la structure fixe 10, une butée 31 est disposée sur la même partie de l'inverseur, soit la structure fixe 10. La butée 31 comporte une face d'appui 32 en opposition avec le pêne 22, c'est à dire qu'elle est tournée dans le sens inverse du sens de la fermeture du pêne 22. Une contre-butée 34 est disposée sur l'obturateur 12 en regard de la surface d'appui 32 de la butée 31 lorsque l'obturateur 12 se referme. La contre-butée 34 arrive contre cette face d'appui 32 lorsque l'obturateur 10 arrive en position fermée sous l'effet de la poussée exercée par le pêne 22 sur l'interface de verrouillage 28.

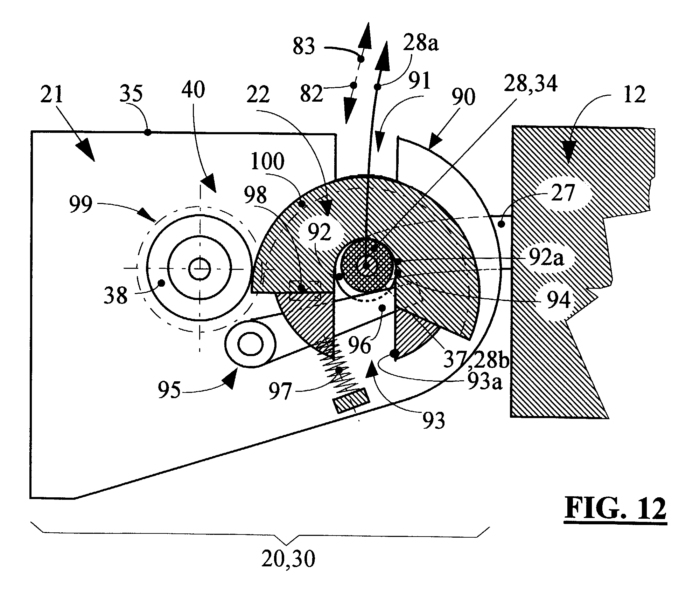

On se reportera maintenant simultanément aux figures 10 et 11. Dans une autre forme de réalisation de l'invention, le pêne 22 pivote suivant un axe géométrique 37 qui est maintenant sensiblement parallèle à la trajectoire 28a de l'interface de verrouillage 28 au voisinage de la position fermée de l'obturateur 12. En position ouverte, l'extrémité 80 du pêne 22 dégage la face d'appui 32 de la butée 31, et recouvre ladite surface d'appui 32 en revenant à la position fermée. L'extrémité 80 du pêne 22 comporte aussi une touche 81 en saillie et tournée dans le sens de la fermeture 82 de l'obturateur 12. L'interface de verrouillage 28 comporte à l'arrière, c'est à dire dans le sens de l'ouverture 83 de l'obturateur 12 une portée oblique 84 sensiblement hélicoïdale par rapport à l'axe géométrique 37 de pivotement du pêne 22, le pêne 22 arrivant en position fermée en appui sur ladite portée oblique 83. Ainsi, lorsque l'obturateur 12 se referme, le pêne 22 étant en position ouverte, l'interface de verrouillage 28 approche de la face d'appui 32 de la butée 31. Le pêne 22 pivote alors vers sa position fermée, et la touche en saillie 81 qui décrit une trajectoire circulaire par rapport à l'axe géométrique 37 de pivotement du pêne 22, arrive au contact de la portée oblique 84 à l'arrière de l'interface de verrouillage 28 et repousse ladite interface de verrouillage 28 contre la face d'appui 32 de la butée 31. la rotation du pêne 22 vers la position fermée s'arrête d'une façon analogue à celle des exemples précédents. Ainsi, dans cet exemple, la fonction de la contre-butée 34 est assurée directement par l'interface de verrouillage 28.

Du fait que l'inclinaison de la portée oblique 84 est réduite, la coopération entre la touche en saillie 81 du pêne 22 avec la portée oblique 84 n'est pas réversible. En d'autres termes, l'interface de verrouillage 28 exerce à l'ouverture sur le pêne 22 une force qui est reprise essentiellement par les pivots 85 reliant le pêne 22 au boîtier 35 selon l'axe géométrique de pivotement 37, cette force n'arrivant pas à faire pivoter le pêne 22 dans le sens de l'ouverture du fait des frottements mécaniques entre la surface d'appui 84 et la touche en saillie 81 du pêne 22. La transmission du mouvement du moteur au pêne, non représentée sur les figures 10 et 11, est en conséquence déchargée de l'essentiel de l'effort de maintien du pêne 22 en position fermée.

On se reportera maintenant à la figure 12. Dans une autre forme de réalisation de l'invention, le boîtier 35 du verrou 21 comporte une excroissance 90 en forme de crochet présentant une ouverture 91 par laquelle passe l'interface de verrouillage 28 lorsqu'elle arrive vers la position fermée selon la trajectoire 28a, ladite interface de verrouillage 28 étant en position fermée située à l'intérieur du crochet 90. Le pêne 22 a la forme d'un barillet et pivote dans le crochet 90 suivant l'axe géométrique de pivotement 37. Le barillet 22 comporte un évidement central cylindrique 92 centré sur l'axe géométrique 37 et susceptible de recevoir l'interface de verrouillage 28 lorsque l'obturateur 12 est en position fermée. L'interface de verrouillage 28 sera avantageusement mais non nécessairement un galet pivotant. L'évidement central 92 se prolonge radialement vers l'extérieur du barillet 22 par une ouverture radiale 93 dont la largeur est supérieure à celle de l'interface de verrouillage 28 afin de laisser passer celle-ci avec du jeu.
La paroi 93a de l'ouverture radiale 93 se raccorde avec la paroi 92a de l'évidement central 92 suivant une ligne d'intersection droite 94. Dans le voisinage de la ligne d'intersection 94, la paroi 93a de l'ouverture radiale 93 fait office de came et permet de repousser l'interface de verrouillage 28 dans l'évidement central 92 du barillet 22 lorsque ce dernier est en rotation vers la position fermée. La transmission 40 entre le moteur 38 et le barillet 22 peut s'effectuer de différentes manières. Dans l'exemple de la figure 12, le moteur 38 est parallèle à l'axe géométrique de pivotement 37 du barillet 22 et entraîne le barillet 22 par l'intermédiaire d'un pignon 99 qui s'engrène sur un secteur denté 100 à la périphérie du barillet 22. Le verrou 21 comporte aussi un poussoir 95 constitué par un levier articulé 96 rappelé par un ressort 97, ledit poussoir 95 étant au contact de l'interface de verrouillage 28 en fin de course vers la position fermée, ledit poussoir 95 exerçant alors sur l'interface de verrouillage 28 une poussée dans le sens de l'ouverture 83. Avantageusement, le détecteur de présence 33 de l'interface de verrouillage 28 est constitué par ledit poussoir 95 avec lequel coopère un microcontact 98, ce microcontact 98 étant connecté au moteur 38.

Avantageusement, le poussoir 95 est très souple en début de course et dur en fin de course, afin de pouvoir simultanément détecter la présence de l'obturateur avec une force de réaction minimale, et ensuite repousser avec force ladite interface de verrouillage 28 contre la paroi 92a de l'évidement central 92.
Le fonctionnement du dispositif est le suivant pour ce qui concerne la fermeture de l'obturateur 12, le barillet 22 ayant son ouverture radiale 93 tournée vers l'interface de verrouillage 28 :
- Sous l'effet du mouvement de fermeture de l'obturateur 12, l'interface de verrouillage 28 pénètre dans l'ouverture radiale 93 du barillet 22 et arrive contre le levier articulé 96.
- Sous l'effet de la pression exercée par l'interface de verrouillage 28 sur le levier articulé 96, celui-ci se déplace et ferme le microcontact 98 qui déclenche la rotation du moteur 38.
- Le moteur 38 entraîne en rotation le barillet 22 sur un demi tour environ par l'intermédiaire d'un pignon 99.
- Sous l'effet de la rotation du barillet 22, la paroi 93a de l'ouverture radiale 93 au voisinage de la ligne d'intersection 94 passe par dessus l'interface de verrouillage 28 et repousse celle-ci vers la position fermée dans l'évidement central 92 du barillet 22. Ce déplacement de l'interface de verrouillage 28 comprime encore plus le ressort de rappel 97 du levier 96.
- La rotation du barillet 22 se poursuivant, la ligne d'intersection 94 puis la paroi 92a de l'évidement central 92 passent par dessus l'interface de verrouillage 28 qui est maintenant emprisonnée dans l'évidement central 92.
- La rotation du moteur 38 est ensuite coupée par un détecteur de position fermée non représenté du barillet 22, d'une manière équivalente à celles qui ont déja été exposées dans les exemples précédents.

L'invention n'est pas limitée aux réalisations qui viennent d'être décrites mais en couvre au contraire toutes les variantes qui pourraient leur être apportées sans sortir de leur cadre ni de leur esprit.

Le verrou 21 peut être disposé sur l'obturateur 12, l'interface de verrouillage 28 étant alors elle-même disposée sur la structure fixe 10 par l'intermédiaire du tirant 27. Une telle disposition peut être réalisée simplement du fait que le moteur est électrique et que l'espace interne à l'obturateur 12 n'est habituellement pas occupé, cette disposition présentant l'avantage de ne pas devoir aménager des évidements dans la structure fixe 10 afin d'y loger les verrous 21, ce qui permet d'augmenter la rigidité de ladite structure fixe 10 et d'en simplifier la réalisation. Dans ce cas, la trajectoire 28a de l'interface de verrouillage 28 est la trajectoire relative de ladite interface de verrouillage 28 par rapport au verrou 21.

L'orientation du verrou 21 dans l'espace est fonction de la trajectoire 28a de l'interface de verrouillage et du sens de la fermeture 82. Dans les exemples de réalisation qui viennent d'être décrits et qui correspondent aux inverseurs de poussée du type "à porte" ou du type "target", l'obturateur 12 étant dans ce cas habituellement appelé "porte", le sens de la fermeture 82 est centripète. Dans le cas des inverseurs de poussée du type "à écopes", l'obturateur 12 s'ouvre selon un mouvement centripète afin de couper le flux de gaz de propulsion 5, le sens de la fermeture 82 étant alors centrifuge. Dans le cas des inverseurs dits "à grille", l'obturateur 12 est une virole entourant la structure fixe 10 et soumis à un mouvement de translation selon l'axe géométrique 2. Dans ce cas, la trajectoire 28a est parallèle à l'axe géométrique 2 et le sens de la fermeture 82 est de l'arrière 4 vers l'avant 18.

## Revendications

1. Dispositif de fermeture et de verrouillage des obturateurs d'un inverseur de poussée pour aéronef, ledit inverseur de poussée (1) comportant une structure fixe ou première partie (10), ledit inverseur de poussée (1) comportant aussi au moins un obturateur ou seconde partie (12), ledit dispositif de fermeture et de verrouillage (30) comportant un verrou (21) solidaire d'une partie (10, 12), ainsi qu'une interface de verrouillage (28) solidaire de l'autre partie (12, 10), ledit verrou (21) comportant un pêne (22) coopérant avec l'interface de verrouillage (28) pour maintenir l'obturateur (12) fermé, caractérisé en ce qu'il comporte un moteur (38) relié au pêne (22), afin de mouvementer ce pêne (22) au moins à la fermeture, et en ce que pendant son mouvement de fermeture, le pêne (22) est susceptible de repousser l'interface de verrouillage (28) vers sa position fermée (28b), afin d'achever la fermeture de l'obturateur (12) avec l'énergie fournie par le moteur (38).

2. Dispositif selon la revendication 1, caractérisé en ce que le moteur (38) est rotatif et en ce qu'il est relié au pêne (22) par une transmission (40) démultipliée, afin de générer sur le pêne (22) une force importante à partir d'un petit moteur (38).

3. Dispositif selon la revendication 1 ou 2 caractérisée en ce que la transmission (40) est irréversible, afin de s'opposer à l'ouverture du pêne (22) sous l'effet de la réaction exercée par l'interface de verrouillage (28) sur le pêne (22).

4. Dispositif selon la revendication 3, caractérisé en ce que la transmission (40) comporte une vis sans fin (41) s'engrènant sur une roue à secteur denté (42), la vis sans fin (41) étant accouplée au moteur (38) et la roue à secteur denté (42) au pêne (22).

5. Dispositif selon la revendication 3, caractérisé en ce que la transmission (40) comporte une vis (55) entraînant un écrou (56), la vis (55) étant accouplée au moteur (38) et l'écrou (56) au pêne (22).

6. Dispositif selon l'une quelconque des revendications 1 à 5, caractérisé en ce qu'il comporte un système de mesure de l'effort transmis par le moteur 38 vers l'interface de verrouillage 28 afin de mesurer l'effort appliqué par le pêne 22 sur l'interface de verrouillage 28.

7. Dispositif selon l'une quelconque des revendications 1 à 6, caractérisé en ce qu'il comporte un détecteur de présence (33) de l'interface de verrouillage (28), face au verrou (21) et en ce que le moteur (38) est commandé à la fermeture par le détecteur de présence (33), afin d'asservir la fermeture du pêne (22) à la présence de l'interface de verrouillage (28) face au verrou (21).

8. Dispositif selon l'une quelconque des revendications 1 à 7, caractérisé en ce qu'il comporte un détecteur de position fermée (50) du pêne (25), ledit détecteur de position fermée (50) commandant l'arrêt du moteur (38) lorsque le pêne (22) arrive en position fermée, afin d'arrêter l'entraînement à la fermeture du pêne (22) lorsqu'il arrive en position fermée.

9. Dispositif selon la revendication 8, caractérisé en ce que le détecteur de position fermée (50) commande le moteur (38) à la fermeture de façon réversible, afin de remettre ledit moteur (38) en fonctionnement dans le sens de la fermeture lorsque le pêne (22) s'écarte de sa position fermée.

10. Dispositif selon l'une des revendications 8 ou 9, caractérisé en ce qu'un dispositif de signalisation est connecté au détecteur de position fermée (50) du pêne (22), afin de signaler la bonne fermeture du verrou (21).

11. Dispositif selon l'une des revendications 8 ou 9, le moteur (38) étant commandé à la fermeture par un détecteur de présence (33) de l'interface de verrouillage (28), caractérisé en ce qu'un dispositif de signalisation est connecté au détecteur de position fermée (50) du pêne (22), afin de signaler la fermeture du verrou (21) sur l'interface de verrouillage (28).

12. Dispositif selon l'une quelconque des revendications 1 à 11, caractérisé en ce qu'il comporte une butée (31) solidaire de l'ensemble constitué par le verrou (21) et la partie (10, 12) de l'inverseur supportant ledit verrou (21), ladite butée (31) étant en opposition avec le pêne (22) lorsqu'il se referme, et en ce que l'ensemble constitué par l'interface de verrouillage (28) et la partie de l'inverseur (12, 10) supportant ladite interface de verrouillage (28) comporte une contre-butée (34) arrivant en position fermée contre ladite butée (31), afin d'immobiliser l'obturateur (12) en position fermée par l'action combinée du pêne (22) et de la butée (31) en opposition avec le pêne (22).

13. Dispositif selon la revendication 12, caractérisé en ce que la transmission (40) comporte un élément élastique (45) de raideur suffisante, afin d'exercer sur le pêne (22) en position fermée une poussée permanente dans le sens de la fermeture.

14. Dispositif selon la revendication 12 ou 13, caractérisé en ce que la butée (31) est solidaire de la partie (10, 12) de l'inverseur supportant le verrou (21), et en ce que la contre-butée (34) est solidaire de l'autre partie (12, 10).

15. Dispositif selon la revendication 14, caractérisé en ce que la butée (31) est au voisinage du verrou (21) et en ce que la contre-butée (34) est au voisinage de l'interface de verrouillage (28), afin de réduire les contraintes de torsion imposées à la structure fixe (10) et à l'obturateur (12).

16. Dispositif selon la revendication 12 ou 13, le verrou (21) comportant un boîtier (35) caractérisé en ce que la butée (31) est solidaire du boîtier (35) du verrou (21), afin de reprendre directement par le boîtier (35) du verrou (21) l'effort exercé par le pêne (22) et repris par le boîtier (25).

17. Dispositif selon la revendication 16, caractérisé en ce que la contre-butée (34) est constitué par l'interface de verrouillage (28) elle-même, afin de pincer ladite interface de verrouillage (28) entre le pêne (22) et la butée (31).

18. Dispositif selon l'une quelconque des revendications 12 à 17, caractérisé en ce que le pêne (22) du verrou (21) pivote suivant un axe géométrique (37) sensiblement parallèle à la trajectoire relative (28a) de l'interface de verrouillage (28) au voisinage de la position fermée, en ce que l'interface de verrouillage (28) comporte à l'arrière une portée oblique (84) sensiblement hélicoïdale par rapport à l'axe géométrique (37) de pivotement du pêne (22), ledit pêne (22) arrivant en position fermée en appui sur ladite portée oblique (84).

19. Dispositif selon l'une quelconque des revendications 1 à 11, le verrou (21) comportant un boîtier (35), caractérisé en ce que le pêne (22) est en forme de barillet monté pivotant à l'intérieur d'un crochet (90) solidaire du boîtier (35) du verrou (20), ledit pêne (22) comportant un évidement central (92) prolongé par une ouverture radiale (93) susceptible de laisser passer l'interface de verrouillage (28) lorsque le pêne en barillet (22) est en position ouverte, et en ce que l'interface de verrouillage (28) est emprisonnée en position fermée à l'intérieur de l'évidement central (92) par la rotation du barillet (22).

20. Dispositif selon la revendication 19, caractérisé en ce qu'il comporte un poussoir élastique (95) afin de repousser l'interface de verrouillage (28) dans le sens de l'ouverture (83).

21. Dispositif selon la revendication 20, caractérisé en ce que le détecteur de présence (33) du pêne (22) est constitué par le poussoir (95) coopérant avec un microcontact connecté au moteur (38).

22. Dispositif selon la revendication 21, caractérisé en ce que la poussoir (95) est très souple en début de course, et dur en fin de course.
